# DEMANDE DE BREVET EUROPEEN

(11) **EP 0 990 860 A1**
(43) Date de publication de la demande: **05.04.2000**
(21) Numéro de dépôt: 99440262.6
(22) Date de dépôt: 29.09.1999
(51) Int. Cl.: F24F 12/00

(54) **Dispositif thermodynamique de récupération des calories**

(30) Priorité: 29.09.1998 FR 9812267
(71) Demandeur: Ales Ingenierie Recherche Sarl, 30340 Saint Julien les Rosiers (FR)
(72) Inventeur: Audigier, Yves, 30340 Saint Julien les Rosiers (FR); Agniel, Alain, 30340 Salindres (FR)
(74) Mandataire: Arbousse-Bastide, Jean-Claude Philippe

(57) **Abrégé**

Dispositif thermodynamique de récupération des calories ou frigories rejetées par la ventilation d'une maison d'habitation, individuelle ou collective, ou d'un local industriel, du secondaire ou du tertiaire.

Il comporte un moyen (2) d'aspiration de l'air vicié du local (1), un moyen de détermination la température dudit air aspiré, un moyen (50) de récupération des calories ou des frigories dudit air aspiré, un moyen (6) de transport desdites calories ou frigories vers un moyen (60) de traitement de l'air ambient dudit local (1), et un moyen (11) d'apport d'air extérieur dans ledit local (1).

## Description

La présente invention a pour objet un dispositif thermodynamique de récupération des calories ou frigories rejetées par la ventilation d'une maison d'habitation ou d'un local industriel.

On connaît déjà des dispositifs de ventilation qui équipent la plupart des locaux industriels ou d'habitation, tels qu'une ventilation mécanique contrôlée, dite VMC, qui consiste généralement en un réseau de conduits débouchant chacun dans une pièce du local et relié à un moyen d'aspiration rejetant l'air aspiré vers l'extérieur.

Une VMC est généralement associée à des arrivées d'air extérieur, et elle contribue au renouvellement de l'air ambiant.

Toutefois celle-ci présente l'inconvénient d'aspirer un air qui aura été préalablement chauffé ou refroidi par des moyens appropriés, tels que respectivement une installation de chauffage ou une installation de climatisation. D'autre part il est nécessaire de chauffer ou de refroidir l'air de remplacement avec, pour conséquence, une consommation accrue d'énergie.

Pour pallier cet inconvénient certains constructeurs ont proposé d'intégrer les conduits d'arrivée d'air extérieur aux conduits d'extraction, de manière à permettre un échange thermique entre les deux flux d'air, ce qui n'est toutefois pas suffisant.

On connaît également des dispositifs de gestion de l'air permettant d'améliorer la qualité de l'air dans un local, qui comprennent des moyens d'aspiration de l'air vicié, des moyens de traitement dudit air vicié, des moyens d'aspiration d'air extérieur et de mélange de celui-ci à l'air recyclé, des moyens de mise à température dudit mélange et des moyens de distribution dudit mélange dans le local.

Ces dispositifs sont notamment ceux décrits dans les documents FR 2.739.178, EP 0 294 730, FR 2.385.990 et BE 845.496. Ces dispositifs, bien que d'une utilisation plus économique qu'une installation thermodynamique classique, demeurent toutefois gourmands en énergie. D'autre part, du fait de leur relative complexité et de leur compacité, ils sont difficilement adaptables à une installation existante, et ils sont donc très onéreux.

La présente invention a pour but de proposer un dispositif thermodynamique de récupération des calories ou frigories rejetées par la ventilation d'une maison d'habitation, individuelle ou collective, ou d'un local industriel, du secondaire ou du tertiaire, permettant de remédier au divers inconvénients précités.

Le dispositif objet de la présente invention se caractérise essentiellement en ce qu'il comporte un moyen d'aspiration de l'air vicié d'un local, un moyen de détermination la température dudit air aspiré, un moyen de récupération des calories ou des frigories dudit air aspiré, un moyen de transport desdites calories ou frigories vers un moyen de traitement de l'air ambiant dudit local, et un moyen d'apport d'air extérieur dans ledit local.

Selon une caractéristique additionnelle du dispositif selon l'invention, il comporte un moyen de filtration de l'air vicié, intercalé entre le moyen d'aspiration et le moyen de récupération des calories ou de frigories.

Selon une autre caractéristique additionnelle du dispositif selon l'invention, un moyen de régulation de la température de l'air associé à un moyen d'aspiration d'air extérieur, est intercalé entre le moyen d'aspiration de l'air vicié et le moyen de récupération des calories ou de frigories.

Conformément à l'invention, le moyen d'aspiration de l'air vicié consiste en une ventilation mécanique contrôlée.

Toujours conformément à l'invention, le moyen de récupération des calories ou des frigories consiste en un climatiseur réversible comprenant un échangeur.

Toujours conformément à l'invention, le moyen de transport des calories ou des frigories consiste en un réseau de tuyauterie où circule un fluide caloporteur.

Toujours conformément à l'invention, le moyen de traitement de l'air ambiant consiste en au moins un évaporateur.

En fonctionnement, la ventilation mécanique contrôlée aspire l'air vicié du local qui est acheminé, après filtration, vers le moyen de régulation où sa température est mesurée pour déterminer l'apport ou non d'air extérieur, puis l'air, filtré et mélangé ou non à de l'air extérieur, traverse le climatiseur réversible qui transmet, par l'intermédiaire du fluide caloporteur, les calories ou les frigories à l'évaporateur. De manière connue, l'évaporateur aspire l'air ambiant et le rejette après l'avoir réchauffé ou refroidi. Le renouvellement de l'air ambiant est assuré par des entrées d'air extérieur disposées dans le local, de préférence à proximité des évaporateurs.

Le dispositif selon l'invention permet ainsi de faire des économies d'énergie importantes, et notamment de l'ordre de 50% par rapport à une installation thermodynamique classique, du fait que l'air utilisé dans le climatiseur réversible est à une température très proche de celle recherchée.

Avantageusement, le dispositif selon l'invention peut être adapté sur une installation existante qui comporte déjà, par exemple, une ventilation mécanique contrôlée et des évaporateurs.

D'autre part, le dispositif selon l'invention présente des avantages du point de vue écologique, notamment lorsqu'il équipe un local industriel, puisque l'air rejeté par le climatiseur réversible est de l'air filtré.

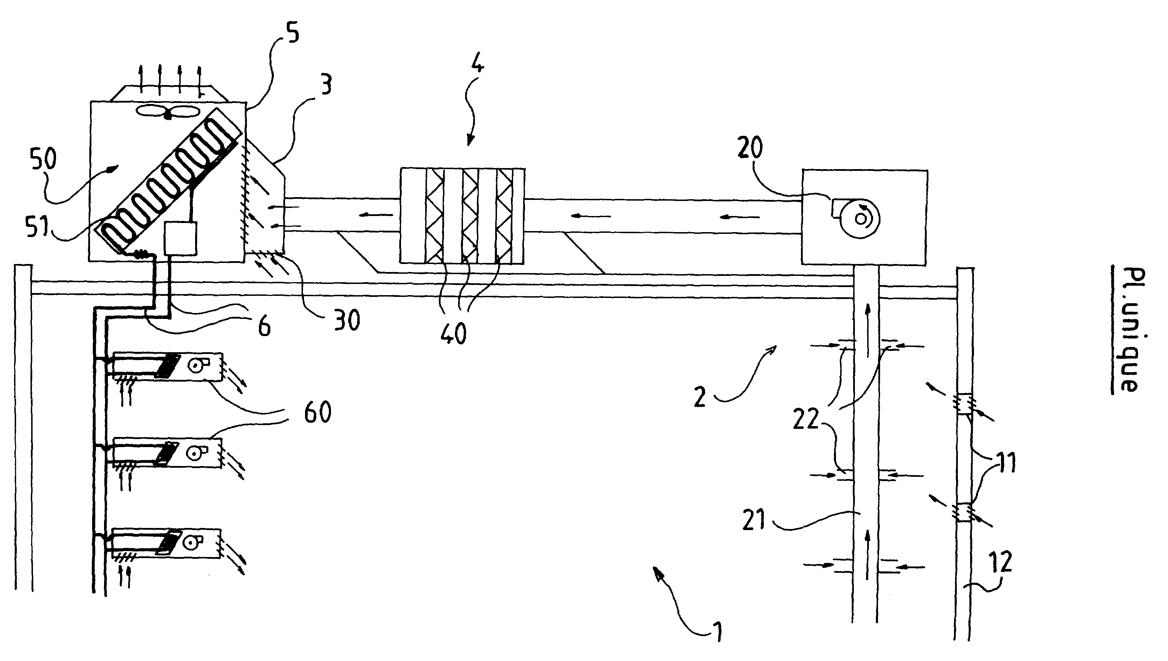

Les avantages et les caractéristiques de la présente invention ressortiront plus clairement de la description qui suit et qui se rapporte au dessin annexé, lequel en représente un mode de réalisation non limitatif.

Dans le dessin annexé la figur-e unique représente une vue schématique partielle en élévation du dispositif selon l'invention.

Si on se réfère à cette figure, on peut voir un local 1 au-dessus duquel est installé le dispositif selon l'invention.

Le local 1 est équipé d'une ventilation mécanique contrôlée 2 qui comprend un moyen d'aspiration 20 connecté à un conduit 21 présentant des bouches 22 en relation avec l'air ambiant du local 1.

L'air aspiré par la ventilation mécanique contrôlée 2 est acheminé vers un caisson de régulation 3, ou régulateur à débit variable, en passant au préalable par un caisson de filtration 4 incorporant une succession de filtres 40 interchangeables, permettant de retenir les particules en suspension dans l'air.

Dans le caisson de régulation 3, un capteur de température non représenté, permet de mesurer la température de l'air filtré, et en fonction de sa valeur, de réaliser de manière contrôlée, par une arrivée d'air 30, un apport d'air extérieur.

Le caisson de régulation 3 est accolé à un caisson 5, sur- lequel il est en prise directe, et qui incorpore un climatiseur réversible 50 de type connu, fonctionnant électriquement.

Le climatiseur réversible 50 comprend essentiellement un échangeur 51 traversé par l'air filtré qui est ensuite évacué vers l'extérieur.

Les calories ou les frigories de l'air filtré sont absorbées par l'échangeur 51, et sont véhiculées par un fluide caloporteur passant dans une tuyauterie 6 jusqu'à des évaporateurs 60 disposés dans le local 1.

La température du flux d'air qui traverse l'échangeur 60 est très proche de celle recherchée dans le local, en sorte que le climatiseur réversible 50 consomme peu d'énergie pour atteindre cette température recherchée.

L'air ambiant du local 1 est aspiré par les évaporateurs 60, puis rejeté dans le local 1 après avoir été soit réchauffé, soit refroidi.

D'autre part, on peut voir sur la figure que le renouvellement de l'air ambiant est assuré par des bouches d'aération 11 logées dans une paroi 12 du local 1, permettant de faire pénétrer dans ce dernier de l'air extérieur.

On notera que si le dispositif objet de la présente invention n'était pas équipé d'un moyen de filtration, son rendement énergétique serait supérieur, avec toutefois l'inconvénient d'un encrassement du caisson 5 et du climatiseur réversible 50, au risque d'endommager celui-ci.

Il va de soi que la présente invention ne saurait être limitée à la description qui précède d'un de ses modes de réalisation, susceptible de subir un certain nombre de modifications sans pour autant sortir du cadre de l'invention.

## Revendications

1. Dispositif thermodynamique de récupération des calories ou frigories rejetées par la ventilation d'une maison d'habitation ou d'un local industriel, caractérisé en ce qu'il comporte un moyen (2) d'aspiration de l'air vicié du local (1), un moyen de détermination la température dudit air aspiré, un moyen (50) de récupération des calories ou des frigories dudit air aspiré, un moyen (6) de transport desdites calories ou frigories vers un moyen (60) de traitement de l'air ambiant dudit local (1), et un moyen (11) d'apport d'air extérieur dans ledit local (1).

2. Dispositif selon la revendication 1 caractérisé en ce qu'il comporte en outre un moyen (4) de filtration de l'air vicié qui est intercalé entre le moyen (2) d'aspiration et le moyen (50) de récupération des calories ou de frigories.

3. Dispositif selon la revendication 1 ou la revendication 2, caractérisé en ce qu'un moyen (3) de régulation de la température de l'air associé à un moyen d'aspiration d'air extérieur, est intercalé entre le moyen (2) d'aspiration de l'air vicié et le moyen (50) de récupération des calories ou de frigories.

4. Dispositif selon l'une quelconque des revendications précédentes, caractérisé en ce que le moyen d'aspiration (2) de l'air vicié consiste en une ventilation mécanique contrôlée.

5. Dispositif selon l'une quelconque des revendications précédentes, caractérisé en ce que le moyen (5) de récupération des calories ou des frigories consiste en un climatiseur réversible comprenant un échangeur.

6. Dispositif selon l'une quelconque des revendications précédentes caractérisé en ce que le moyen (6) de transport des calories ou des frigories consiste en un réseau de tuyauterie où circule un fluide caloporteur.

7. Dispositif selon l'une quelconque des revendications précédentes caractérisé en ce que le moyen (60) de traitement de l'air ambiant consiste en au moins un évaporateur.
